# FASCICULE DE BREVET EUROPEEN

(11) **EP 2 019 028 B1**
(45) Date de publication et mention de la délivrance du brevet: **17.03.2010**
(21) Numéro de dépôt: 08305385.0
(22) Date de dépôt: 08.07.2008
(51) Int. Cl.: B62D 63/06, B60P 3/30, B60P 1/28, B62D 63/08, B62B 1/24, A01M 7/00, B62B 1/16, A01C 23/00

(54) **Remorque transformable**
Transformierbarer Anhänger
Transformable trailer

(30) Priorité: 24.07.2007 FR 0756703
(43) Date de publication de la demande: 28.01.2009
(73) Titulaire: ETESIA (Société par actions simplifiée), 67160 Wissembourg (FR)
(72) Inventeur: Schmitt, Alfred, 67250, Lampertsloch (FR)
(74) Mandataire: Nuss, Laurent

(56) Documents cités:
- EP-A- 1 498 339
- FR-A- 1 053 639
- US-A1- 2003 132 256
- US-A1- 2007 164 526
- US-B1- 6 206 302

## Description

La présente invention concerne le domaine des dispositifs de manutention, plus particulièrement ceux utilisés dans le domaine du jardinage professionnel ou de loisirs et a pour objet une remorque.

Les professionnels ou jardiniers de loisirs sont en général équipés d'une tondeuse autoportée également connue sous la désignation de tracteur tondeuse leur permettant de raccourcir le temps de tonte de terrains des surfaces importantes, par exemple à partir de 1500 m².

Or, ces terrains de surface importante nécessitent souvent des traitements complémentaires à celui de la tonte. Parmi ces traitements, on peut notamment citer la pulvérisation de produits d'entretien du gazon ou de l'herbe tels que les engrais, par exemple, ou encore des produits empêchant la prolifération de la mousse.

Dans les cas où ces terrains sont attenants à un verger ou à un jardin, ces derniers peuvent également nécessiter des traitements tels que la pulvérisation d'engrais, des plantations et/ou des semis périodiques, nécessitant de ce fait soit un arrosage ponctuel lors de la plantation ou des parcelles ensemencées, soit un arrosage plus ou moins régulier des fleurs et/ou légumes. Or, si de telles plantations sont effectuées à des endroits du terrain difficilement, voire nullement accessibles avec les moyens d'arrosage habituels par tuyau d'arrosage ou par conduite d'arrosage automatique, un tel arrosage devra nécessairement être effectué manuellement. Il en est de même en ce qui concerne l'apport d'eau pour réaliser les mélanges nécessaires aux traitements phytosanitaires.

A cet effet, le jardinier doit déplacer le matériel et/ou les produits phytosanitaires, ainsi que l'eau pour l'arrosage, ce qui peut être particulièrement pénible dans le cas de terrains de grande surface et notamment lorsque les plantations, traitements et autres sont à effectuer en lisière extrême du terrain.

En ce qui concerne l'arrosage, et comme déjà indiqué plus haut, le jardinier est contraint de déplacer d'importants volumes d'eau de la source ou point de ravitaillement à la zone d'arrosage. Lorsque cette zone d'arrosage est éloignée de la source, ce qui est généralement le cas dans les terrains de surface importante, ce transport d'eau pose un problème conséquent. Une solution envisagée, lorsque la source est proche du terrain, est de raccorder plusieurs tuyaux entre eux de manière à former un long tuyau susceptible de conduire l'eau de la source jusqu'à la zone de traitement. Cette solution pose un certain nombre de problèmes.

Un inconvénient inhérent au raccordement entre eux de plusieurs tuyaux est que le raccordement n'est pas toujours totalement hermétique, de sorte que des fuites d'eau apparaissent au niveau de ces derniers, qui entraînent un surcoût ainsi qu'un gaspillage d'eau.

De plus, les tuyaux utilisés doivent être convenablement vidangés et rangés, par exemple sur un dévidoir, de sorte que le temps de rangement du matériel est allongé.

Une autre solution connue permettant d'arroser des zones éloignées d'une source d'eau consiste à remplir des bidons ou réservoirs à la source et de les transporter jusqu'à la zone d'arrosage. Cette solution nécessite toutefois une importante manutention.

En ce qui concerne la pulvérisation, selon la taille de la surface à traiter, le jardinier utilise, en général, soit un pulvérisateur porté, ce qui entraîne la nécessité de posséder un équipement volumineux et coûteux, soit un pulvérisateur dorsal, ce qui entraîne des conditions de travail pénibles dues au portage de la cuve du pulvérisateur lors du travail de traitement, d'une part et, d'autre part, entre le point de ravitaillement et la zone de travail.

On connaît également par US-A1-2007/164526 une remorque destinée à être tractée par un véhicule motorisé et transformable sans outil en une brouette. Cependant, une telle remorque ne permet pas de transporter facilement du liquide, sans nécessiter de précaution particulière et sans que cela ne limite sa capacité.

La présente invention a pour but de pallier ces inconvénients en proposant une remorque transformable en brouette et pouvant remplir différentes fonctions.

A cet effet, elle a pour objet une remorque, destinée à être tractée par un véhicule motorisé et transformable sans outil en une brouette, dont la benne peut être basculée et forme simultanément un réservoir pour liquides, **caractérisée en ce que** la benne est constituée par une double paroi formant le réservoir pour liquides.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale d'une remorque selon l'invention raccordée à un véhicule motorisé ;
la figure 2 est une vue en élévation latérale de la remorque de la figure 1 dans laquelle la benne est en position renversée, et
la figure 3 est une vue en élévation frontale de la remorque.

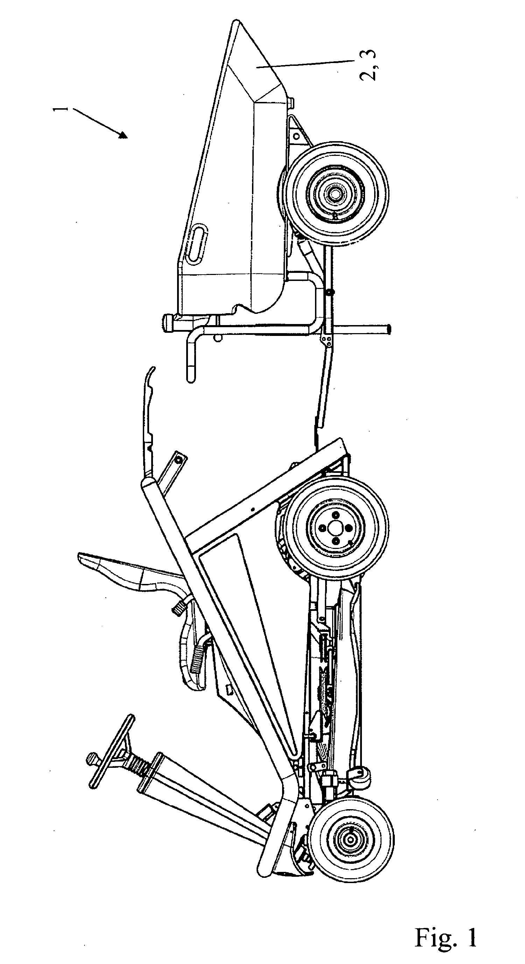

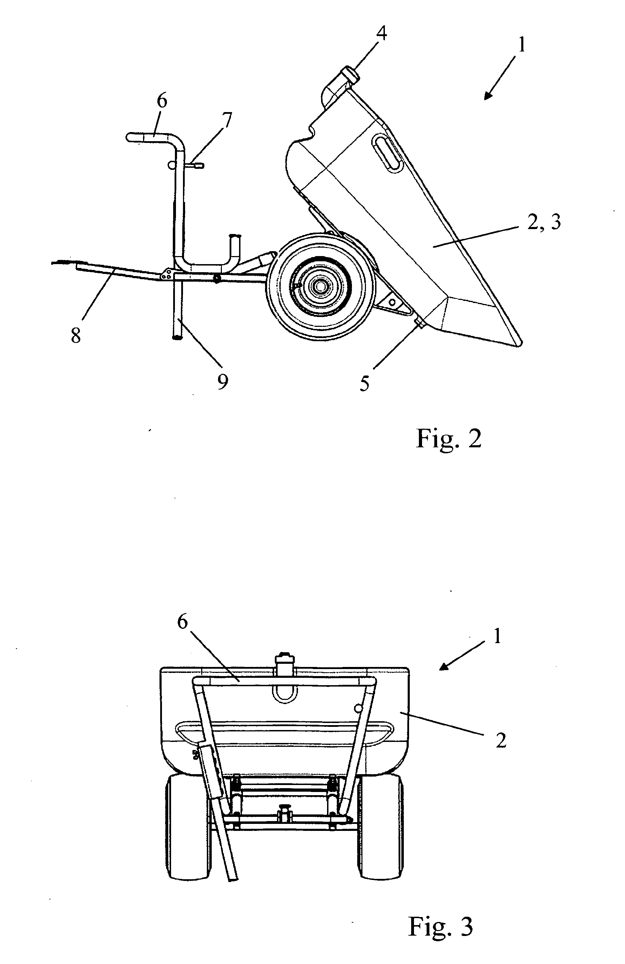

Les figures 1 à 3 des dessins annexés représentent une remorque 1, destinée à être tractée par un véhicule motorisé et transformable sans outil en une brouette, dont la benne 2 peut être basculée. Le véhicule motorisé destiné à tracter la remorque 1 selon l'invention peut être, par exemple, une tondeuse autoportée pourvue d'un moyen d'attelage ou micro tracteur.

Conformément à l'invention, la benne 2, forme simultanément un réservoir 3 pour liquides et peut être constituée par une double paroi formant le réservoir 3 pour liquides. Ainsi, la remorque peut être utilisée pour le transport de plusieurs types de matériaux ou outils. De manière avantageuse, grâce à la double paroi, le transport des liquides ne nécessite aucune précaution particulière et ne limite pas non plus la capacité de transport de la remorque 1.

Ainsi, il est possible de disposer en permanence d'un réservoir 3 pour liquides, de sorte qu'il n'est plus nécessaire de trouver un moyen pour transporter les liquides, ces derniers pouvant être transportés simultanément avec d'autres outils ou le reste du matériel nécessaire pour le traitement de la zone de terrain éloignée.

Comme représenté sur les figures annexées, la remorque peut comporter une poignée 6 pour sa manipulation, notamment lorsqu'elle est utilisée en tant que brouette. La benne 2 est également, de préférence, basculable de manière à pouvoir déverser son contenu. A cet effet, il peut être prévu que la poignée 6 comporte un moyen de retenue 7 de la benne 2 lorsque cette dernière est en position de service correspondant à la position de la figure 1. Ce moyen de retenue 7 peut, par exemple, se présenter sous forme d'un levier monté à articulation sur la poignée 6, comportant un moyen de rappel en position de verrouillage sous forme d'un ressort de rappel et un crochet s'encliquetant dans un élément d'accrochage solidaire de la benne 2.

La poignée 6 se présente sous la forme d'une structure tubulaire fixée sur le châssis de la remorque 1 et s'étendant sensiblement jusqu'au bord supérieur de cette dernière.

Pour permettre d'atteler la remorque 1 selon l'invention à un tracteur ou véhicule motorisé, ladite remorque peut présenter un timon 8 susceptible d'être verrouillé dans une position de non utilisation lorsque la remorque 1 est utilisée en tant que brouette. A cet effet, le timon 8, monté par l'intermédiaire d'une broche sur une platine de fixation de la remorque 1, peut pivoter autour d'un axe horizontal pour atteindre une position de non utilisation, dans laquelle il est sensiblement vertical.

Lorsque la remorque 1 est détachée du tracteur et est utilisée en tant que brouette, il est nécessaire que cette dernière puisse être maintenue dans une position de service telle que celle représentée à la figure 1. A cet effet, la remorque 1 comprend une béquille 9.

Comme cela est représenté sur les figures annexées, la benne 2 comporte, d'une part, dans sa partie supérieure, une bonde de remplissage 4 et, d'autre part, à l'extrémité de sa partie de fond la plus basse en position d'utilisation de la remorque 1, un orifice 5 de vidange ou de soutirage. Cet orifice 5 permet un transvasement du liquide contenu vers un récipient tel d'un arrosoir, un seau ou autre pour la distribution individuelle aux plantes ou pour le remplissage d'un appareillage accessoire de traitement phytosanitaire, sans nécessiter aucun dispositif annexe de transport forcé du liquide.

Aussi bien la bonde de remplissage 4, que l'orifice 5 de vidange peuvent être raccordés à un tuyau pour permettre le remplissage du réservoir 3, respectivement la vidange du réservoir 3 ou l'écoulement et la distribution du liquide contenu dans ce dernier.

Avantageusement, la remorque 1 selon l'invention peut comporter un moyen de mise sous pression pneumatique du réservoir 3, afin de permettre une distribution de liquide sous pression à des fins de pulvérisation de produits phytosanitaires ou autres au moyen de dispositifs de pulvérisation raccordés à l'orifice 5 de vidange ou de soutirage.

Selon une première variante de réalisation de la remorque 1, ce moyen de mise sous pression peut être du type manuel, raccordé directement avec la bonde de remplissage 4 et faire office de bouchon pour cette dernière.

Selon une seconde variante de réalisation de la remorque 1, le moyen de mise sous pression peut consister en une pompe à actionnement par un moteur électrique alimentée par le véhicule motorisé tractant la remorque 1 et raccordable à la bonde de remplissage 4 ou par une batterie fixée sur la remorque. Dans ce cas de figure, le tracteur est électrique ou dispose d'un moyen de fourniture d'énergie électrique telle qu'une batterie.

Enfin, selon une troisième variante de réalisation, le moyen de mise sous pression peut consister en une source pneumatique du véhicule motorisé tractant la remorque 1 susceptible d'être raccordée pneumatiquement à la bonde de remplissage 4 ou à un orifice de raccordement spécifique prévu au niveau de la partie supérieure de la benne 2, par exemple proche de la bonde de remplissage 4. Pour ce faire, il est nécessaire que le tracteur dispose d'une telle source pneumatique. Le raccordement à cette source peut être du type à raccord rapide.

La remorque peut avantageusement être pourvue d'un moyen de pulvérisation de produits phytosanitaires ou autres monté sur la remorque 1 de manière amovible et se présentant soit sous forme d'une lance à commande manuelle, soit sous forme d'une ou de plusieurs rampes de pulvérisation escamotables en position de non utilisation.

Grâce à l'invention, le jardinier qui souhaite par exemple traiter des arbres fruitiers situés au bout de son terrain par pulvérisation de produits phytosanitaires peut préparer ses produits, verser lesdits produits dans le réservoir 3 et les mélanger avec l'eau directement à l'endroit où ces produits sont stockés et où une source d'eau est généralement disponible sans nécessiter de déplacements inutiles et fastidieux. Il peut ainsi traiter une surface importante avec un volume de liquide de traitement pouvant correspondre à la contenance de plusieurs pulvérisateurs manuels dorsaux. En fonction du type de traitement envisagé, le jardinier choisira le moyen de traitement le plus adapté. Pour un traitement d'une surface, l'utilisation d'une ou de plusieurs rampes de pulvérisation sera préconisé, alors que pour le traitement d'endroits d'accès difficile, l'utilisation d'une lance à commande manuelle sera privilégiée.

Dans le cas de l'utilisation d'une telle lance, et lorsque le moyen de mise sous pression est du type manuel, le jardinier peut également dételer la remorque 1 du tracteur pour réaliser la pulvérisation de traitements phytosanitaires. Il est préférable toutefois, pour garantir une manoeuvre aisée de la remorque, que le terrain soit plat.

En outre, si le jardiner a prévu de réaliser simultanément d'autres travaux, tels quel la taille de certains arbres, par exemple, il peut transporter les outils prévus à cet effet sur la remorque pour les avoir constamment à portée de main.

Etant donné que la capacité de chargement d'une telle benne 2 est relativement élevée, cette dernière peut être pourvue d'un dispositif de commande de son basculement sous la forme d'un vérin électromécanique ou hydraulique. Ce vérin est de préférence alimenté par le tracteur auquel est attachée la remorque 1.

Pour permettre un chargement de produits légers et volumineux, tels que des feuilles mortes, par exemple, la benne 2 de la remorque 1 peut être munie de ridelles.

Grâce à la remorque 1 selon l'invention, il est donc possible de déplacer facilement un volume de liquide ainsi que différents outils et substances nécessaires à l'entretien et à la récolte d'un jardin, d'une plantation ou autres. En outre, elle permet d'éviter l'acquisition d'une brouette, d'un pulvérisateur, d'une cuve transportable et d'un pulvérisateur étant donné que ladite remorque 1 selon l'invention englobe l'ensemble des fonctions réalisées par ces dispositifs.

A titre d'exemple, il peut être prévu que le réservoir 3 de la remorque 1 puisse contenir environ soixante litres.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Remorque destinée à être tractée par un véhicule motorisé et transformable sans outil en une brouette, dont la benne (2) peut être basculée et forme simultanément un réservoir (3) pour liquides, remorque **caractérisée en ce que** la benne (2) est constituée par une double paroi formant le réservoir (3) pour liquides.

2. Remorque, selon la revendication 1, **caractérisée en ce que** la benne (2) comporte, d'une part, dans sa partie supérieure, une bonde de remplissage (4) et, d'autre part, à l'extrémité de sa partie de fond la plus basse en position d'utilisation de la remorque (1), un orifice (5) de vidange ou de soutirage.

3. Remorque, selon la revendication 2, **caractérisée en ce qu'**elle comporte un moyen de mise sous pression pneumatique du réservoir afin de permettre une distribution de liquide sous pression à des fins de pulvérisation de produits phytosanitaires ou autres au moyen de dispositifs de pulvérisation raccordés à l'orifice (5) de vidange ou de soutirage.

4. Remorque, selon la revendication 3, **caractérisée en ce que** le moyen de mise sous pression est du type manuel, raccordé directement avec la bonde de remplissage (4) et fait office de bouchon pour cette dernière.

5. Remorque, selon la revendication 3, **caractérisée en ce que** le moyen de mise sous pression consiste en une pompe à actionnement par un moteur électrique alimentée par le véhicule motorisé tractant la remorque (1) et raccordable à la bonde de remplissage (4) ou par une batterie fixée sur la remorque.

6. Remorque, selon la revendication 3, **caractérisée en ce que** le moyen de mise sous pression consiste en une source pneumatique du véhicule motorisé tractant la remorque (1) susceptible d'être raccordée pneumatiquement à la bonde de remplissage (4) ou à un orifice de raccordement spécifique prévu au niveau de la partie supérieure de la benne (2).

7. Remorque, selon l'une quelconque des revendications 3 à 6, **caractérisée en ce qu'**elle est pourvue d'un moyen de pulvérisation de produits phytosanitaires ou autres monté sur la remorque (1) de manière amovible et se présentant soit sous forme d'une lance à commande manuelle, soit sous forme d'une ou de plusieurs rampes de pulvérisation escamotables en position de non utilisation.

8. Remorque, selon l'une quelconque des revendications 1 à 7, **caractérisée en ce que** sa benne 2 est pourvue d'un dispositif de commande de son basculement sous la forme d'un vérin électromécanique ou hydraulique.

9. Remorque, selon l'une quelconque des revendications 1 à 8, **caractérisée en ce que** sa benne 2 est munie de ridelles.

## Claims

1. Trailer intended to be towed by a motorized vehicle and which can be converted without the use of tools into a wheelbarrow, the dump body (2) of which can be tipped and at the same time forms a reservoir (3) for liquids, the trailer being **characterized in that** the dump body (2) consists of a double wall forming the reservoir (3) for liquids.

2. Trailer according to Claim 1, **characterized in that** the dump body (2) comprises, on the one hand, in its upper part, a filling plug (4) and, on the other hand, at the end of its bottom part that is lowermost when the trailer (1) is in the position of use, a draining or withdrawing orifice (5).

3. Trailer according to Claim 2, **characterized in that** it comprises a means of placing the reservoir under pneumatic pressure so as to allow liquid to be distributed under pressure for the purposes of spraying plant protection or other products using spray devices connected to the draining or withdrawing orifice (5).

4. Trailer according to Claim 3, **characterized in that** the pressurizing means is of the manual type, connected directly to the filling plug (4) and acting as a stopper therefor.

5. Trailer according to Claim 3, **characterized in that** the pressurizing means consists of a pump operated by electric motor powered by the motorized vehicle that tows the trailer (1) and that can be connected to the filling plug (4), or by a battery fixed to the trailer.

6. Trailer according to Claim 3, **characterized in that** the pressurizing means consists of a pneumatic source belonging to the motorized vehicle that tows the trailer (1) and that can be connected pneumatically to the filling plug (4) or to a special-purpose connection orifice provided in the upper part of the dump body (2).

7. Trailer according to any one of Claims 3 to 6, **characterized in that** it is provided with a means of spraying plant protection or other products, which is mounted on the trailer (1) removably and takes the form either of a manually operated lance or of one or more spray booms that can be retracted into a position of non-use.

8. Trailer according to any one of Claims 1 to 7, **characterized in that** its dump body 2 is provided with a means for controlling the tipping thereof, this means being in the form of an electromechanical or hydraulic actuating cylinder.

9. Trailer according to any one of Claims 1 to 8, **characterized in that** its dump body 2 is fitted with sidewall extensions.

## Patentansprüche

1. Anhänger, welcher dazu bestimmt ist, durch ein motorisiertes Fahrzeug gezogen zu werden und welcher ohne Werkzeug in eine Schubkarre umgebaut werden kann, dessen Mulde (2) gekippt werden kann und gleichzeitig als ein Behältnis (3) für Flüssigkeiten ausgebildet ist, und wobei der Anhänger **dadurch gekennzeichnet ist, dass** die Mulde (2) aus einer Doppelwand gebildet ist, welche das Behältnis (3) für Flüssigkeiten bildet.

2. Anhänger nach Anspruch 1,
**dadurch gekennzeichnet,**
**dass** die Mulde (2) einerseits in ihrem oberen Bereich mit einem Loch (4) zum Auffüllen und andererseits am Ende des Bereichs des Bodens, welcher am tief liegendsten ist beim Gebrauch des Anhängers (1), eine Öffnung (5) zum Ablassen oder zur Entnahme aufweist.

3. Anhänger nach Anspruch 2,
**dadurch gekennzeichnet,**
**dass** dieser ein pneumatisches Druckeinsatzmittel des Behältnisses aufweist, um eine Verteilung der Flüssigkeit unter Druck zum Zwecke des Versprühens von Pflanzenschutzmitteln oder anderen mit Hilfe von Sprüheinrichtungen zu ermöglichen, welche an die Öffnung (5) zum Entleeren oder zur Entnahme angeschlossen sind.

4. Anhänger nach Anspruch 3,
**dadurch gekennzeichnet,**
**dass** das Druckeinsatzmittel manueller Art ist und direkt am Loch (4) zum Auffüllen angeschlossen ist und als Stopfen für letzteres dient.

5. Anhänger nach Anspruch 3,
**dadurch gekennzeichnet,**
**dass** das Druckeinsatzmittel aus einer Pumpe besteht, die durch einen elektrischen Motor betätigt wird, der durch das motorisierte Fahrzeug angetrieben wird, welches den Anhänger (1) zieht und die am Loch (4) zum Auffüllen angeschlossen ist oder durch eine Batterie, welche am Anhänger angebracht ist.

6. Anhänger nach Anspruch 3,
**dadurch gekennzeichnet,**
**dass** das Druckeinsatzmittel aus einer pneumatischen Quelle des motorisierten Fahrzeugs besteht, welches den Anhänger (1) zieht, geeignet zum Anschließen an dem Loch (4) zum Auffüllen auf pneumatischer Weise oder an einer spezifischen Anschlussöffnung, welche in Höhe des oberen Bereichs der Mulde (2) vorgesehen ist.

7. Anhänger nach einem der Ansprüche 3 bis 6,
**dadurch gekennzeichnet,**
**dass** dieser mit Sprühmitteln für Pflanzenschutzmittel oder andere versehen ist, welche an dem Anhänger (1) abnehmbar angebracht sind, sei es in Form einer handbetätigten Spritzdüse, sei es in Form einer oder mehrerer versenkbarer Sprühbalken, wenn sich der Anhänger in der Position des Nichtgebrauchs befindet.

8. Anhänger nach einem der Ansprüche 1 bis 7,
**dadurch gekennzeichnet,**
**dass** seine Mulde (2) mit einer Bedieneinrichtung für sein Kippen in Form eines elektromechanischen oder hydraulischen Zylinders versehen ist.

9. Anhänger nach einem der Ansprüche 1 bis 8,
**dadurch gekennzeichnet,**
**dass** seine Mulde (2) mit Ladebordwänden versehen ist.
